# EUROPEAN PATENT SPECIFICATION

(11) **EP 4 149 332 B1**
(45) Date of publication and mention of the grant of the patent: **25.12.2024**
(21) Application number: 21724645.3
(22) Date of filing: 07.05.2021
(51) Int. Cl.: A47J 31/44

(54) **COFFEE MACHINE AND METHOD FOR DISPENSING A MILK EMULSION WITH SAID COFFEE MACHINE**
KAFFEEMASCHINE UND VERFAHREN ZUR AUSGABE EINER MILCHEMULSION MIT DER KAFFEEMASCHINE
MACHINE À CAFÉ ET PROCÉDÉ DE DISTRIBUTION D'UNE ÉMULSION DE LAIT AVEC LADITE MACHINE À CAFÉ

(30) Priority: 19.06.2020 IT 202000014716
(43) Date of publication of application: 22.03.2023
(73) Proprietor: De'Longhi Appliances S.r.l., 31100 Treviso (IT)
(72) Inventor: PANCIERA, Antonio, 31100 Treviso (IT); ROSETTA, Simone, 31100 Treviso (IT)
(74) Representative: Rapisardi, Mariacristina
(86) International application number: PCT/EP2021/062133
(87) International publication number: WO 2021/254689

(56) References cited:
- EP-A1- 2 878 241
- EP-A1- 3 162 257
- EP-A2- 0 472 272
- EP-A2- 1 639 925
- EP-A2- 2 337 481
- EP-B1- 2 337 481
- EP-B1- 2 878 241
- EP-B2- 0 472 272
- DE-A1- 102005 004 852
- US-B2- 7 644 652

## Description

The present invention refers to a coffee machine and to a method for dispensing a milk emulsion with said coffee machine.

Coffee machines are widely available commercially today comprising a milk container having a Venturi-effect milk-emulsifying device, such device is for example disclosed in EP 3 162 257 A1.

These coffee machines are designed to obtain an emulsion of hot milk in a cup.

In practice the steam produced by a boiler of the coffee machine is fed into a mixing chamber provided in the emulsifying device where the Venturi effect creates a vacuum that draws milk from a suitable container of the milk and air from the external atmospheric environment.

Typically, the temperature of the milk emulsion is significantly greater than the environmental temperature of 25 °C and this is due to the fact that the steam required to trigger the Venturi effect has the further effect of heating the milk.

In fact, typically, a milk emulsion can be produced at a final temperature in the cup comprised between 50°C and 75°C.

It has been ascertained that the temperature of a foodstuff affects the perception of the taste that occurs in the taste buds of the tongue and is completed with the aroma perceived by the receptors of the nasal mucous.

In fact, in the mouth, the temperature of the food or of the beverage modifies the microscopic channels of the taste buds and the sending of the signal to the brain through the taste nerves.

Below 15°C, the taste buds are almost paralysed, whereas at 37°C the sensitivity of the taste buds increases over 100 times and for this reason the sweet taste of an ice cream is perceived only when it melts in the mouth.

On the other hand, hot food emits vapours that reach the nasal mucous and contribute about 80% to the perception of taste, but if the temperature exceeds 35°C, the perception of taste decreases, because the sensation of burning hides the tasting nuances.

The technical task addressed by the present invention is thus to make a coffee machine adapted to heighten the perception of the taste of the dispensed milk emulsion.

Within the context of this technical task, an aim of the invention is to make a coffee machine that is suitable for dispensing a milk emulsion at low temperature. Another aim of the invention is to make a coffee machine having a milk-emulsifying device that is easy to clean.

A further aim of the invention is to make a coffee machine having a kit of interchangeable milk emulsifying devices for producing milk emulsion at low temperature and at high temperature.

The technical task, and these and other aims according to the present invention are achieved by making a coffee machine comprising a water tank, a boiler for the production of steam, a water supply pump for supplying water to the boiler for generation of steam, an external coffee dispenser, an external steam dispenser having a dispensing opening for dispensing a steam flow, a milk container having an emulsifying device for emulsifying the milk by Venturi effect generated by the steam flow, said emulsifying device having a mixing chamber for mixing milk/steam/air, a milk aspirating channel by Venturi effect having an inlet opening into the mixing chamber, an air aspirating channel by Venturi effect having valve means and an inlet opening into the mixing chamber, said mixing chamber having a sealed removable connection opening with the external steam dispenser and an outlet opening of the milk emulsion aligned to the steam dispensing opening and connected to an external dispenser of the milk emulsion, wherein the outlet opening of the milk emulsion is larger than the steam dispensing opening for the activation of the Venturi effect, characterised in that said minimal passage area of said milk aspirating channel has a diameter not less than 5 mm, the dispensing opening area of the external steam dispenser has a diameter comprised between 0.5 mm and 2 mm, the outlet opening area has a diameter comprised between 2 mm and 5 mm, an air inlet opening in the air aspirating channel adjustable by said valve means has, in a maximum opening configuration, a diameter comprised between 0.3 mm and 2 mm, and said external steam dispenser is configured to dispense a steam flow comprised between 0.8 g/s and 1.2 g/s at a steam temperature comprised between 110 °C and 130 °C and at a steam pressure comprised between 0.5 and 2 atm.

The present invention also discloses a dispensing method for dispensing a milk emulsion into a cup with a coffee machine comprising a water tank, a boiler for the production of steam, a water supply pump for supplying water to the boiler for generation of steam, an external coffee dispenser, an external steam dispenser having a dispensing opening for dispensing a steam flow, a milk container having an emulsifying device for emulsifying the milk by Venturi effect generated by the steam flow, said emulsifying device having a mixing chamber for mixing milk/steam/air, a milk aspirating channel by Venturi effect having an inlet opening into the mixing chamber, an air aspirating channel by Venturi effect having valve means and an inlet opening into the mixing chamber, said mixing chamber having a sealed removable connection opening with the external steam dispenser and an outlet opening of the milk emulsion aligned to the steam dispensing opening and connected to an external dispenser of the milk emulsion, wherein the outlet opening of the milk emulsion is larger than the steam dispensing opening for the activation of the Venturi effect, characterised in dispensing a flow of milk emulsion having a value comprised between 10 g/s and 15 g/s at a temperature no more than 25°C higher than the temperature of the milk present in the milk container by means of a reduced thermal energy contribution of the steam used to milk aspiration corresponding to a weight of condensed steam in the milk emulsion between 2% and 8% greater than the weight of the milk aspirated from the milk container.

In one embodiment of the invention a flow of milk emulsion is dispensed having a value comprised between 10 g/s and 15 g/s at a temperature no more than 20°C higher than the temperature of the milk present in the milk container.

In one embodiment of the invention said container is filled with milk having a temperature comprised between 3°C and 7°C.

In one embodiment of the invention, said milk container has thermal insulation.

In one embodiment of the invention, said milk aspirating channel is interchangeable with a milk aspirating channel having a smaller minimal passage area.

In one embodiment of the invention, said valve means are interchangeable with valve means that provides an adjustable inlet opening for the entry of air into the air aspirating channel, having in a maximum opening configuration a smaller area. In one embodiment of the invention, the coffee machine has a cup resting surface, the external coffee dispenser is configured and arranged for direct dispensing into a cup positioned on the cup resting surface, and the external milk emulsion dispenser is configured and arranged for direct dispensing into said cup.

Further features and advantages of the invention will become more apparent from the description of a preferred, but not exclusive, embodiment of the coffee machine according to the invention, which is illustrated by way of approximate and nonlimiting example in the attached drawings, of which:

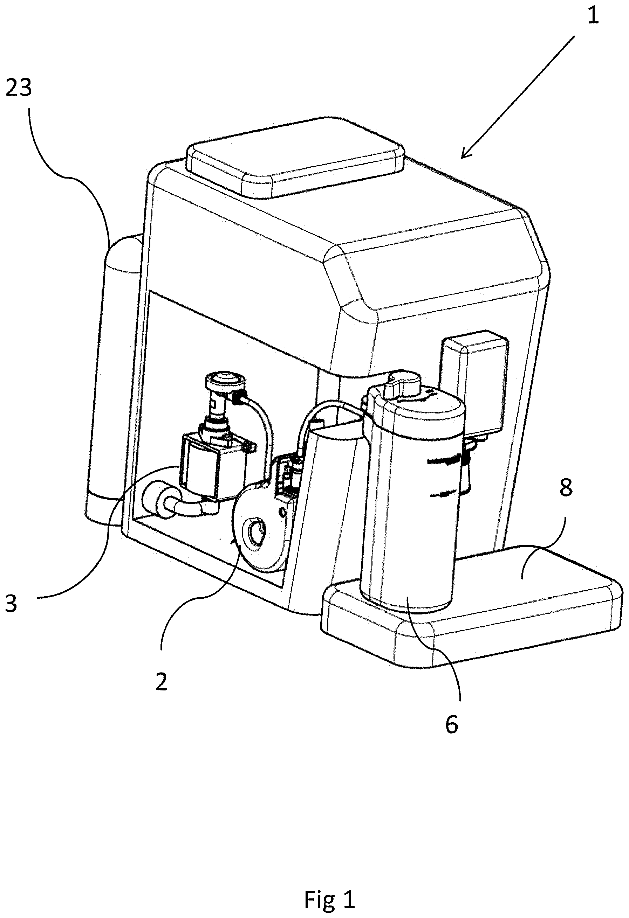

figure 1 shows the coffee machine with the emulsifying device connected;

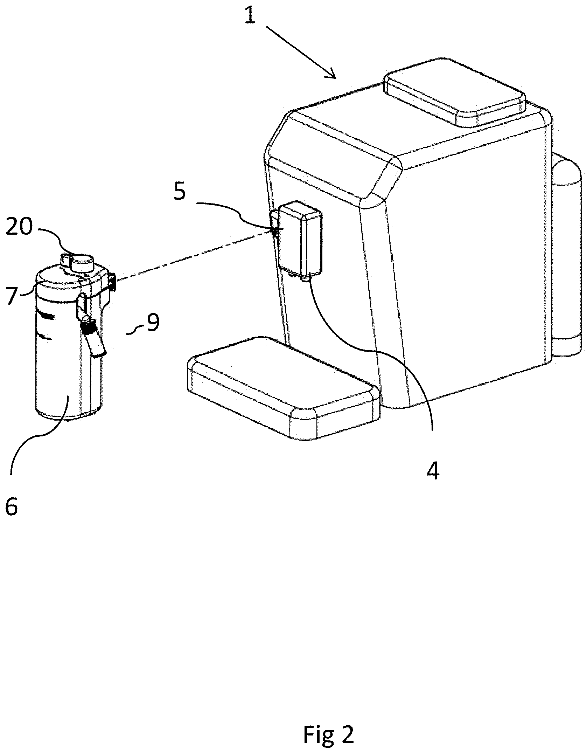

figure 2 shows the coffee machine with the emulsifying device disconnected;
figure 3 shows a vertical section of the mixing chamber of the emulsifying device for producing the cold emulsion of milk;
figure 4 shows the knob with the valve means for producing the cold emulsion of milk;
figure 5 shows a vertical section of the mixing chamber of the emulsifying device for producing the hot emulsion of milk;
figure 6 shows the knob with the valve means for producing the hot emulsion of milk;

With reference to the figures cited, a coffee machine is shown and indicated in its entirety by reference number 1.

The coffee machine 1 comprises a water tank 23, boiler 2 for the production of steam, a water supply pump 3 for supplying water to the boiler 2 for generation of steam, an external coffee dispenser 4, an external steam dispenser 5, and a milk container 6 having an emulsifying device 7 for emulsifying the milk by Venturi effect.

The external steam dispenser 5 is configured to dispense a steam flow comprised between 0.8 g/s and 1.2 g/s at a temperature comprised between 110 °C and 130 °C and at a pressure comprised between 0.5 atm and 2 atm.

Preferably, the coffee machine 1 is configured to dispense the milk emulsion directly into the cup and for this purpose features a cup resting surface 8 on which also the milk container 6 rests.

In particular, the external coffee dispenser 4 is configured and arranged for direct dispensing into a cup below positioned on the cup resting surface 8, and the emulsifying device 7 has an external dispenser of the milk emulsion 9 which is also configured and arranged for direct dispensing into the cup.

The emulsifying device 7 has a mixing chamber 10 for mixing milk/steam/air, a milk aspirating channel 12 for aspirating the withdrawn milk by Venturi effect from the milk container 6 and having an inlet opening 11 into the mixing chamber 10, an air aspirating channel 14 by Venturi effect having valve means 15 and an inlet opening 13 into the mixing chamber 10, a sealed removable connection opening 16 with the external steam dispenser 5, and an outlet opening 17 of the milk emulsion connected to the external dispenser 9 of the milk emulsion.

The emulsifying device 7 is integrated into an extractable cover 18 of the milk container 6, but in one version it can be integrated directly into the milk container 6.

The outlet opening 17 is positioned on the extension of the axis L of the external steam dispenser 5 whilst the milk inlet opening 11 and the air inlet opening 13 are arranged radially and on the side opposite the extension of the axis L of the external steam dispenser 5.

The milk aspirating channel 12 can consist at least partially of a structurally independent tubular piece stiffly connected to the body of the mixing chamber 10 and extending as far as the bottom of the milk container 6.

The external dispenser of the milk emulsion 9 can consist at least partially of a structurally independent tubular piece connected rotatably to the body of the mixing chamber 10 between a rest position and a dispensing position.

The valve means 15 can comprise a shutter and a knob 20 for driving thereof adapted to close or open in an adjustable manner the air aspirating channel 14. The shutter in the case under examination consists of a hollow stem 30 that extends coaxially and solidly constrained to the knob 20.

The hollow stem 20 is in turn housed coaxially in the air aspirating channel 14 and engages peripherally with a tilted internal perimeter rib 31 of the air aspirating channel 14.

The tilted rib 31 can be formed on a removable portion of the air aspirating channel 14.

The hollow stem 20 is provided with an air inlet opening 22 in the air aspirating channel 14.

The air inlet opening 22 in the air aspirating channel 14 is configured as a slit that extends in the axial direction of the hollow stem 20.

The atmospheric air enters the cavity of the stem 20 through the slit and the cavity of the stem 20 communicates directly with the inlet opening 13 for the entry of the air into the mixing chamber 10.

The rotation of the knob 20 on its axis varies the intersection position of the slit with the tilted rib 31 and then varies the section of the slit that is used for the entry of air into the aspirating channel 14.

The section of the slit used for the entry of the air into the air aspirating channel 14 is in fact the section comprised between the apex of the slit and the point where the slit intersects the rib 31.

The air aspirating channel 14 is closed when the tilted rib 31 is positioned at an upper apex of the slit.

Starting from this position, as the knob 20 is rotated, a progressively increasing section of the slit opens and then an inlet area for the entry of the air into the air aspirating channel 14 grows progressively up to a maximum value.

Downstream of the slit, the air passage area along the air aspirating channel is the same as or greater than the aforesaid maximum value.

It is clear that the amount of the increase of the inlet area for the entry of the air into the air aspirating channel 14 is correlated with the width of the slit, the wider the slit, the greater the inlet area for the entry of the air into the air aspirating channel 14 and the maximum value thereof.

The milk aspirating channel 12 has a minimal passage area sufficiently large as to ensure the dispensing of a milk emulsion having a weight of between 2% and 8%, still better between 3% and 6% greater than the weight of the milk aspirated from the milk container 6, the additional weight of the milk emulsion compared to the aspirated milk being that of the condensed steam included into the milk emulsion. In particular, the milk aspirating channel 12 has a minimal passage area sufficiently large as to ensure the dispensing of a flow of milk emulsion having a value comprised between 10 g/s and 15 g/s.

The milk inlet opening 11 is circular and has a diameter not less that 5 mm, preferably comprised between 5 mm and 10 mm.

The milk aspirating channel 12 has a minimum inner cross section that is not less than the inlet opening of the milk 11.

The dispensing opening 21 of the external steam dispenser 5 is circular and has a diameter comprised between 0.5 mm and 2 mm, preferably between 0.5 mm and 1 mm, and is lower than the outlet opening 17.

The air aspirating opening is circular and has a diameter comprised between 0.2 mm and 1 mm.

The valve means 15, as said, adjusts the air passage area along the air aspirating channel 14.

The inlet opening 22 of the air in the air aspirating channel 14, in a maximum opening configuration, has an equivalent diameter comprised between 0.3 mm and 2 mm.

Equivalent diameter means the diameter of a circular area of the same size as the area of the inlet opening 22 for entry of the air into the air aspirating channel 14. The outlet opening 17 is circular and has a diameter comprised between 2 mm and 5 mm, preferably between 2 mm and 2.5 mm.

The emulsifying device 7 by Venturi effect can thus have great milk aspiration efficiency with an aspirated milk flow of not less than 10 g/s.

With the milk aspirating channel 12 that is thus dimensioned, a milk emulsion is obtained at a temperature that is not higher than 25°C when the temperature of the milk present in the milk container 6 is comprised between 3°C and 7°C.

In order to maintain the temperature at a value that is significantly below ambient temperature, the milk container 6 can have thermal insulation.

The milk emulsifying device can have interchangeable parts for dispensing a hotter milk emulsion.

In particular, the air adjusting valve means and preferably also the milk aspirating channel can be interchangeable.

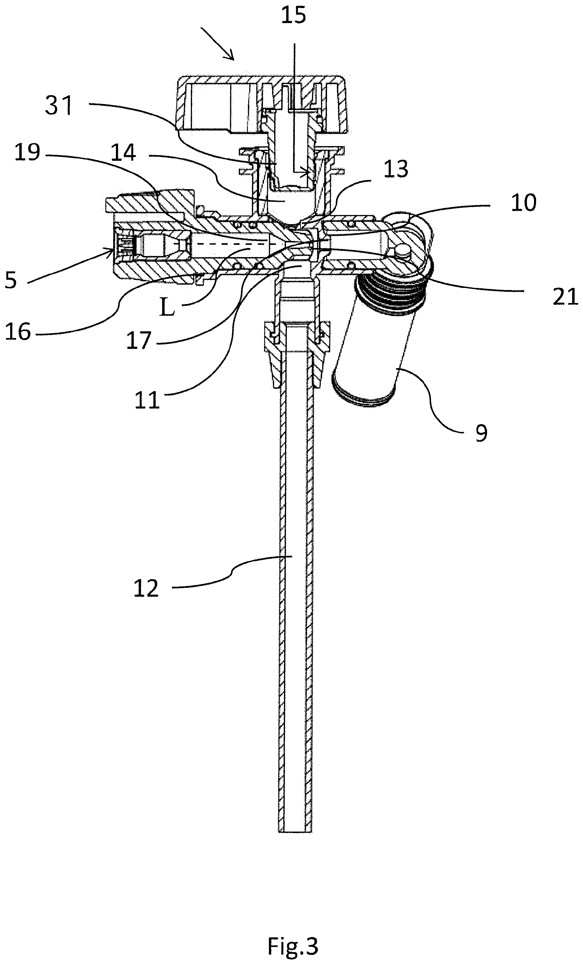

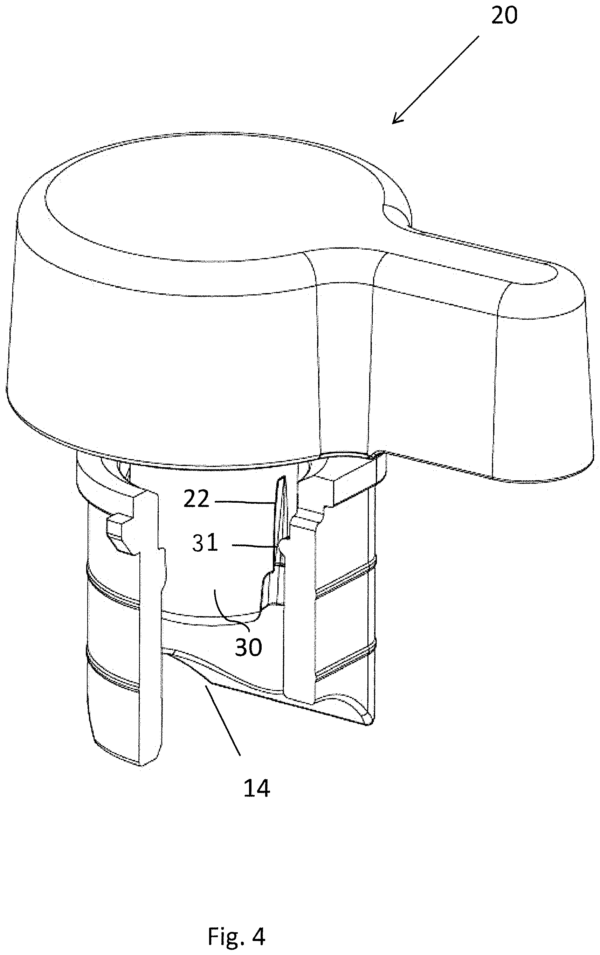

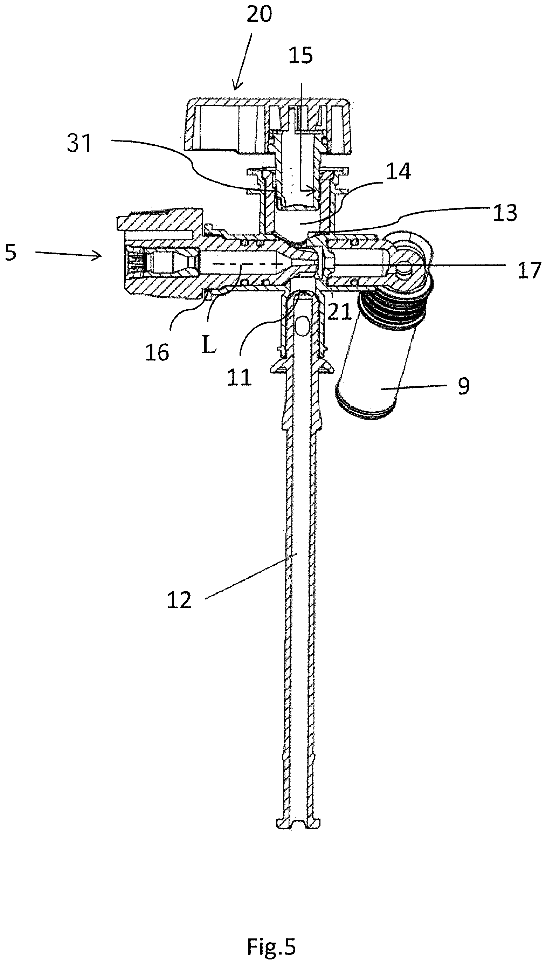

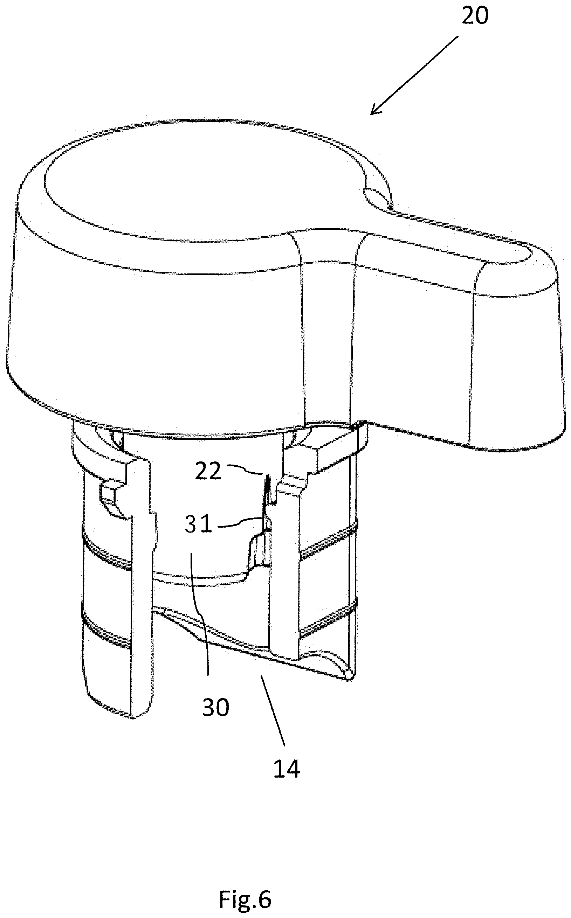

The comparison between the air adjusting valve means and the milk aspirating channel illustrated in figures 3 and 4 with the means illustrated in figures 5 and 6 clarifies better, also visually, the difference.

In fact, for producing a hotter milk emulsion, the milk aspirating channel illustrated in figures 5 and 6 is used, that, having a lower minimal passage area, for example at the end of the interchangeable part, lowers the efficiency of milk aspiration by Venturi effect.

Further, again for producing a hotter milk emulsion, valve means illustrated in figures 5 and 5 can be used that provides a smaller maximum passage area of the inlet opening 22 for entry of the air into the air aspirating channel 14 because the slit has a reduced width.

With these replacements, a milk emulsion can be produced at a final temperature in the cup comprised between 50°C and 75°C.

The method for dispensing the milk emulsion increases the efficiency of milk aspiration by Venturi effect by increasing, with respect to a traditional emulsifying device that produces a hotter milk emulsion, the minimal passage area of the milk aspirating channel up to a value corresponding to dispensing a milk emulsion having a weight of between 2% and 8% greater than the weight of the milk aspirated from the container, and a flow of milk emulsion having a value comprised between 10 g/s and 15 g/s.

Compared to prior art emulsifying devices by Venturi effect for aspirating milk and air in the mixing chamber, the minimal passage area of the milk aspirating channel is now increased up to a value corresponding to the dispensing of a milk emulsion at a temperature that is not higher than 25°C when the temperature of the milk present in the milk container is comprised between 3°C and 7°C and the steam dispensed by the external steam dispenser 5 has a temperature comprised between 110 °C and 130 °C and a pressure comprised between 0.5 atm and 2 atm. The coffee machine as conceived herein is susceptible to many modifications and variations, all falling within the scope of the inventive concept; further, all the details are replaceable by technically equivalent elements.

For example, the various openings disclosed above, also those that are disclosed for example as having a circular shape, can have a non-circular shape and in this case diameter is to be intended to be the equivalent diameter, i.e. the diameter of a circle that has substantially the same non-circular opening area.

Further, the scope of the claims is intended to cover milk emulsions of animal or vegetable origin (for example cow's milk, soya milk, oat milk, rice milk, goat's milk, buffalo milk, sheep milk etc.)

## Claims

1. A dispensing method for dispensing a milk emulsion into a cup with a coffee machine (1) comprising a water tank (23), a boiler (2) for the production of steam, a water supply pump (3) for supplying water to the boiler (2) for generation of steam, an external coffee dispenser (4), an external steam dispenser (5) having a dispensing opening (21) for dispensing a steam flow, a milk container (6) having an emulsifying device for emulsifying the milk by Venturi effect generated by the steam flow, said emulsifying device (7) having a mixing chamber (10) for mixing milk/steam/air, a milk aspirating channel (12) by Venturi effect having an inlet opening (11) into the mixing chamber (10), an air aspirating channel (14) by Venturi effect having valve means (15) and an inlet opening (13) into the mixing chamber (10), said mixing chamber (10) having a sealed removable connection opening (16) with the external steam dispenser (5) and an outlet opening (17) of the milk emulsion aligned to the steam dispensing opening (21) and connected to an external dispenser (9) of the milk emulsion, wherein the outlet opening (17) of the milk emulsion is larger than the steam dispensing opening (21) for the activation of the Venturi effect, **characterised in** dispensing a flow of milk emulsion having a value comprised between 10 g/s and 15 g/s at a temperature no more than 25°C higher than the temperature of the milk present in the milk container (6) by means of a reduced thermal energy contribution of the steam used to milk aspiration, said milk emulsion having a weight of between 2% and 8% greater than the weight of the milk aspirated from said milk container (6), the additional weight of said milk emulsion compared to the aspirated milk being that of the condensed steam included into said milk emulsion.

2. A dispensing method for dispensing a milk emulsion according to claim 1, **characterised in** dispensing a flow of milk emulsion having a value comprised between 10 g/s and 15 g/s at a temperature no more than 20°C higher than the temperature of the milk present in the milk container (6).

3. A dispensing method for dispensing a milk emulsion according to any previous claim, **characterised in** filling said container (6) with milk having a temperature comprised between 3°C and 7°C.

4. A coffee machine (1) comprising a water tank (23), a boiler (2) for the production of steam, a water supply pump (3) for supplying water to the boiler (2) for generation of steam, an external coffee dispenser (4), an external steam dispenser (5) having a dispensing opening (21) for dispensing a steam flow, a milk container (6) having an emulsifying device for emulsifying the milk by Venturi effect generated by the steam flow, said emulsifying device (7) having a mixing chamber (10) for mixing milk/steam/air, a milk aspirating channel (12) by Venturi effect having an inlet opening (11) into the mixing chamber (10), an air aspirating channel (14) by Venturi effect having valve means (15) and an inlet opening (13) into the mixing chamber (10), said mixing chamber (10) having a sealed removable connection opening (16) with the external steam dispenser (5) and an outlet opening (17) of the milk emulsion aligned to the steam dispensing opening (21) and connected to an external dispenser (9) of the milk emulsion, wherein the outlet opening (17) of the milk emulsion is larger than the steam dispensing opening (21) for the activation of the Venturi effect, **characterised in that** said minimal passage area of said milk aspirating channel (12) has a diameter not less than 5 mm, the dispensing opening area (21) of the external steam dispenser (5) has a diameter comprised between 0.5 mm and 2 mm, the outlet opening area (17) has a diameter comprised between 2 mm and 5 mm, an air inlet opening (22) in the air aspirating channel (14) adjustable by said valve means has, in a maximum opening configuration, a diameter comprised between 0.3 mm and 2 mm, and said external steam dispenser (5) is configured to dispense a steam flow comprised between 0.8 g/s and 1.2 g/s at a steam temperature comprised between 110 °C and 130 °C and at a steam pressure comprised between 0.5 and 2 atm.

5. The coffee machine (1) according to the preceding claim, **characterised in that** said minimal passage area of said milk aspirating channel (12) has a diameter comprised between 5 mm and 10 mm.

6. The coffee machine (1) according to any claim 4 and 5, **characterised in that** the dispensing opening area (21) of the external steam dispenser (5) has a diameter comprised between 0.5 mm and 1 mm, and the outlet opening area (17) has a diameter comprised between 2 mm and 2.5 mm.

7. The coffee machine (1) according to the preceding claim, **characterised in that** said milk container (6) has a thermal insulation.

8. The coffee machine (1) according to any one claim 4 to 7, **characterised in that** said milk aspirating channel (12) is interchangeable with a milk aspirating channel having a smaller minimal passage area.

9. The coffee machine (1) according to claim 4, **characterised in that** said valve means (15) are interchangeable with valve means which provide an air inlet opening (22) in the air aspirating channel (14) having, in a maximum opening configuration, a smaller area.

10. The coffee machine (1) according to any claim 4 to 9, wherein a cup resting surface (8) is provided, wherein the external coffee dispenser (4) is configured and arranged for direct dispensing into a cup positioned on the cup resting surface (8), wherein the external milk emulsion dispenser (9) is configured and arranged for direct dispensing into said cup.

## Patentansprüche

1. Ein Abgabeverfahren zum Ausgeben einer Milchemulsion in eine Tasse mit einer Kaffeemaschine (1), die einen Wassertank (23), einen Kessel (2) zur Erzeugung von Dampf, eine Wasserversorgungspumpe (3) zur Wasserzufuhr in den Kessel (2) zur Dampferzeugung, einen externen Kaffeeauslass (4), einen externen Dampfauslass (5) mit einer Auslassöffnung (21) zur Ausgabe eines Dampfflusses, einen Milchbehälter (6) mit einer Emulgierungsvorrichtung zur Emulgierung der Milch durch den Venturi-Effekt, der durch den Dampffluss erzeugt wird, umfasst, wobei die Emulgierungsvorrichtung (7) eine Mischkammer (10) zum Mischen von Milch/Dampf/Luft, einen Milchansaugkanal (12) durch Venturi-Effekt mit einer Einlassöffnung (11) in die Mischkammer (10), einen Luftansaugkanal (14) durch Venturi-Effekt mit Ventilmitteln (15) und einer Einlassöffnung (13) in die Mischkammer (10) umfasst, wobei die Mischkammer (10) eine abgedichtete abnehmbare Verbindungsöffnung (16) mit dem externen Dampfauslass (5) und eine Auslassöffnung (17) der Milchemulsion aufweist, die auf die Dampfauslassöffnung (21) ausgerichtet ist und mit einem externen Spender (9) der Milchemulsion verbunden ist, wobei die Auslassöffnung (17) der Milchemulsion größer ist als die Dampfauslassöffnung (21) zur Aktivierung des Venturi-Effekts, **dadurch gekennzeichnet, dass** ein Strom von Milchemulsion mit einem Wert zwischen 10 g/s und 15 g/s bei einer Temperatur, die nicht mehr als 25°C höher ist als die Temperatur der im Milchbehälter (6) befindlichen Milch, durch eine reduzierte thermische Energiezufuhr des zur Milchansaugung verwendeten Dampfes ausgegeben wird, wobei die Milchemulsion ein Gewicht aufweist, das zwischen 2 % und 8 % höher ist als das Gewicht der aus dem Milchbehälter (6) angesaugten Milch, wobei das zusätzliche Gewicht der Milchemulsion im Vergleich zur angesaugten Milch auf den in der Milchemulsion enthaltenen kondensierten Dampf zurückzuführen ist.

2. Ein Abgabeverfahren zum Ausgeben einer Milchemulsion nach Anspruch 1, **dadurch gekennzeichnet, dass** ein Strom von Milchemulsion mit einem Wert zwischen 10 g/s und 15 g/s bei einer Temperatur ausgegeben wird, die nicht mehr als 20°C höher ist als die Temperatur der im Milchbehälter (6) befindlichen Milch.

3. Ein Abgabeverfahren zum Ausgeben einer Milchemulsion nach einem der vorhergehenden Ansprüche, **dadurch gekennzeichnet, dass** der Behälter (6) mit Milch gefüllt wird, die eine Temperatur zwischen 3°C und 7°C aufweist.

4. Eine Kaffeemaschine (1), die einen Wassertank (23), einen Kessel (2) zur Dampferzeugung, eine Wasserzufuhrpumpe (3) zur Wasserzufuhr in den Kessel (2) zur Dampferzeugung, einen externen Kaffeeauslass (4), einen externen Dampfauslass (5) mit einer Auslassöffnung (21) zur Ausgabe eines Dampfflusses, einen Milchbehälter (6) mit einer Emulgierungsvorrichtung zur Emulgierung der Milch durch den durch den Dampffluss erzeugten Venturi-Effekt umfasst, wobei die Emulgierungsvorrichtung (7) eine Mischkammer (10) zum Mischen von Milch/Dampf/Luft, einen Milchansaugkanal (12) durch Venturi-Effekt mit einer Einlassöffnung (11) in die Mischkammer (10), einen Luftansaugkanal (14) durch Venturi-Effekt mit Ventilmitteln (15) und einer Einlassöffnung (13) in die Mischkammer (10) umfasst, wobei die Mischkammer (10) eine abgedichtete, abnehmbare Verbindungsöffnung (16) mit dem externen Dampfauslass (5) und eine Auslassöffnung (17) der Milchemulsion aufweist, die auf die Dampfauslassöffnung (21) ausgerichtet ist und mit einem externen Spender (9) für die Milchemulsion verbunden ist, wobei die Auslassöffnung (17) der Milchemulsion größer ist als die Dampfauslassöffnung (21) zur Aktivierung des Venturi-Effekts, **dadurch gekennzeichnet, dass** der minimale Durchgangsbereich des Milchansaugkanals (12) einen Durchmesser von nicht weniger als 5 mm aufweist, der Auslassbereich (21) des externen Dampfauslasses (5) einen Durchmesser zwischen 0,5 mm und 2 mm aufweist, der Auslassbereich (17) einen Durchmesser zwischen 2 mm und 5 mm aufweist, eine Lufteinlassöffnung (22) im Luftansaugkanal (14), die durch die Ventilmittel verstellbar ist, in einer maximalen Öffnungskonfiguration einen Durchmesser zwischen 0,3 mm und 2 mm aufweist und der externe Dampfauslass (5) so konfiguriert ist, dass ein Dampffluss zwischen 0,8 g/s und 1,2 g/s bei einer Dampftemperatur zwischen 110 °C und 130 °C und bei einem Dampfdruck zwischen 0,5 und 2 atm abgegeben wird.

5. Die Kaffeemaschine (1) nach dem vorhergehenden Anspruch, **dadurch gekennzeichnet, dass** der minimale Durchgangsbereich des Milchansaugkanals (12) einen Durchmesser zwischen 5 mm und 10 mm aufweist.

6. Die Kaffeemaschine (1) nach einem der Ansprüche 4 und 5, **dadurch gekennzeichnet, dass** der Auslassbereich (21) des externen Dampfauslasses (5) einen Durchmesser zwischen 0,5 mm und 1 mm und der Auslassbereich (17) einen Durchmesser zwischen 2 mm und 2,5 mm aufweist.

7. Die Kaffeemaschine (1) nach dem vorhergehenden Anspruch, **dadurch gekennzeichnet, dass** der Milchbehälter (6) eine Wärmedämmung aufweist.

8. Die Kaffeemaschine (1) nach einem der Ansprüche 4 bis 7, **dadurch gekennzeichnet, dass** der Milchansaugkanal (12) mit einem Milchansaugkanal austauschbar ist, der einen kleineren minimalen Durchgangsbereich aufweist.

9. Die Kaffeemaschine (1) nach Anspruch 4, **dadurch gekennzeichnet, dass** die Ventilmittel (15) mit Ventilmitteln austauschbar sind, die eine Lufteinlassöffnung (22) im Luftansaugkanal (14) mit einem kleineren Bereich in der maximalen Öffnungskonfiguration bereitstellen.

10. Die Kaffeemaschine (1) nach einem der Ansprüche 4 bis 9, wobei eine Tassenablagefläche (8) vorgesehen ist, wobei der externe Kaffeeauslass (4) so konfiguriert und angeordnet ist, dass er direkt in eine auf der Tassenablagefläche (8) positionierte Tasse abgibt, und der externe Milchemulsionsauslass (9) so konfiguriert und angeordnet ist, dass er direkt in diese Tasse abgibt.

## Revendications

1. Un procédé de distribution pour distribuer une émulsion de lait dans une tasse avec une machine à café (1) comprenant un réservoir d'eau (23), une chaudière (2) pour la production de vapeur, une pompe d'alimentation en eau (3) pour alimenter la chaudière (2) en eau pour la génération de vapeur, un distributeur de café externe (4), un distributeur de vapeur externe (5) ayant une ouverture de distribution (21) pour la distribution d'un flux de vapeur, un récipient à lait (6) comprenant un dispositif d'émulsification pour émulsifier le lait par effet Venturi généré par le flux de vapeur, ledit dispositif d'émulsification (7) ayant une chambre de mélange (10) pour mélanger le lait/la vapeur/l'air, un canal d'aspiration de lait (12) par effet Venturi ayant une ouverture d'entrée (11) dans la chambre de mélange (10), un canal d'aspiration d'air (14) par effet Venturi ayant des moyens de valve (15) et une ouverture d'entrée (13) dans la chambre de mélange (10), ladite chambre de mélange (10) ayant une ouverture de connexion amovible étanche (16) avec le distributeur de vapeur externe (5) et une ouverture de sortie (17) de l'émulsion de lait alignée sur l'ouverture de distribution de vapeur (21) et reliée à un distributeur externe (9) de l'émulsion de lait, l'ouverture de sortie (17) de l'émulsion de lait étant plus grande que l'ouverture de distribution de vapeur (21) pour l'activation de l'effet Venturi, **caractérisé en ce qu'**il distribue un flux d'émulsion de lait ayant une valeur comprise entre 10 g/s et 15 g/s à une température ne dépassant pas de plus de 25°C la température du lait présent dans le récipient à lait (6) au moyen d'une contribution réduite d'énergie thermique de la vapeur utilisée pour l'aspiration du lait, ladite émulsion de lait ayant un poids compris entre 2 % et 8 % supérieur à celui du lait aspiré du récipient à lait (6), le poids supplémentaire de ladite émulsion de lait par rapport au lait aspiré étant celui de la vapeur condensée incluse dans ladite émulsion de lait.

2. Un procédé de distribution pour distribuer une émulsion de lait selon la revendication 1, **caractérisé en ce qu'**il distribue un flux d'émulsion de lait ayant une valeur comprise entre 10 g/s et 15 g/s à une température ne dépassant pas de plus de 20°C la température du lait présent dans le récipient à lait (6).

3. Un procédé de distribution pour distribuer une émulsion de lait selon l'une quelconque des revendications précédentes, **caractérisé en ce que** le récipient (6) est rempli de lait ayant une température comprise entre 3°C et 7°C.

4. Une machine à café (1) comprenant un réservoir d'eau (23), une chaudière (2) pour la production de vapeur, une pompe d'alimentation en eau (3) pour alimenter la chaudière (2) en eau pour la génération de vapeur, un distributeur de café externe (4), un distributeur de vapeur externe (5) ayant une ouverture de distribution (21) pour distribuer un flux de vapeur, un récipient à lait (6) comprenant un dispositif d'émulsification pour émulsifier le lait par effet Venturi généré par le flux de vapeur, ledit dispositif d'émulsification (7) comprenant une chambre de mélange (10) pour mélanger le lait/la vapeur/l'air, un canal d'aspiration de lait (12) par effet Venturi ayant une ouverture d'entrée (11) dans la chambre de mélange (10), un canal d'aspiration d'air (14) par effet Venturi ayant des moyens de valve (15) et une ouverture d'entrée (13) dans la chambre de mélange (10), ladite chambre de mélange (10) ayant une ouverture de connexion amovible étanche (16) avec le distributeur de vapeur externe (5) et une ouverture de sortie (17) de l'émulsion de lait alignée sur l'ouverture de distribution de vapeur (21) et reliée à un distributeur externe (9) de l'émulsion de lait, l'ouverture de sortie (17) de l'émulsion de lait étant plus grande que l'ouverture de distribution de vapeur (21) pour l'activation de l'effet Venturi, **caractérisée en ce que** ladite zone de passage minimale dudit canal d'aspiration de lait (12) a un diamètre d'au moins 5 mm, la zone d'ouverture de distribution (21) du distributeur de vapeur externe (5) a un diamètre compris entre 0,5 mm et 2 mm, la zone d'ouverture de sortie (17) a un diamètre compris entre 2 mm et 5 mm, une ouverture d'entrée d'air (22) dans le canal d'aspiration d'air (14), réglable par lesdits moyens de valve, ayant, dans une configuration d'ouverture maximale, un diamètre compris entre 0,3 mm et 2 mm, et ledit distributeur de vapeur externe (5) est configuré pour distribuer un flux de vapeur compris entre 0,8 g/s et 1,2 g/s à une température de vapeur comprise entre 110°C et 130°C et à une pression de vapeur comprise entre 0,5 et 2 atm.

5. La machine à café (1) selon la revendication précédente, **caractérisée en ce que** la zone de passage minimale dudit canal d'aspiration de lait (12) a un diamètre compris entre 5 mm et 10 mm.

6. La machine à café (1) selon l'une quelconque des revendications 4 et 5, **caractérisée en ce que** la zone d'ouverture de distribution (21) du distributeur de vapeur externe (5) a un diamètre compris entre 0,5 mm et 1 mm, et la zone d'ouverture de sortie (17) a un diamètre compris entre 2 mm et 2,5 mm.

7. La machine à café (1) selon la revendication précédente, **caractérisée en ce que** le récipient à lait (6) a une isolation thermique.ù

8. La machine à café (1) selon l'une quelconque des revendications 4 à 7, **caractérisée en ce que** le canal d'aspiration de lait (12) est interchangeable avec un canal d'aspiration de lait ayant une zone de passage minimale plus petite.

9. La machine à café (1) selon la revendication 4, **caractérisée en ce que** lesdits moyens de valve (15) sont interchangeables avec des moyens de valve qui fournissent une ouverture d'entrée d'air (22) dans le canal d'aspiration d'air (14) ayant, dans une configuration d'ouverture maximale, une zone plus petite.

10. La machine à café (1) selon l'une quelconque des revendications 4 à 9, comprenant une surface de repos pour tasse (8), le distributeur de café externe (4) étant configuré et agencé pour une distribution directe dans une tasse positionnée sur la surface de repos pour tasse (8), le distributeur externe d'émulsion de lait (9) étant configuré et agencé pour une distribution directe dans ladite tasse.
